# EUROPEAN PATENT SPECIFICATION

(11) **EP 1 034 916 B1**
(45) Date of publication and mention of the grant of the patent: **02.04.2003**
(21) Application number: 98955958.8
(22) Date of filing: 27.11.1998
(51) Int. Cl.: B29D 30/08, B60C 19/12, B29C 73/22, B29C 73/20

(54) **PNEUMATIC TIRE AND PRODUCTION METHOD THEREOF**
LUFTREIFEN UND VERFAHREN ZU DESSEN HERSTELLUNG
PNEUMATIQUE ET SON PROCEDE DE PRODUCTION

(30) Priority: 28.11.1997 JP 32824397; 15.05.1998 JP 13366198
(43) Date of publication of application: 13.09.2000
(73) Proprietor: Sumitomo Rubber Industries, Ltd., Kobe-shi, Hyogo 651-0072 (JP); Honda Giken Kogyo Kabushiki Kaisha, Minato-ku, Tokyo 107-0062 (JP); The Ohtsu Tire And Rubber Co. Ltd., Izumiootsu-shi, Osaka-fu 595-0044 (JP)
(72) Inventor: YOSHIDA, Shu Room 502, Akashi-shi Hyogo-ken 674-0092 (JP); TAJIMA, Katsunori, Amagasaki-shi Hyogo-ken 661-0966 (JP); OKUNO, Kenji, Akashi-shi Hyogo-ken 673-0003 (JP); AOI, Hidemichi, Izumi-shi Osaka-fu 594-1111 (JP); NAGATA, Yukinori, Kishiwada-shi Osaka-fu 596-0003 (JP); NAKAMURA, Kazunori, Izumisano-shi Osaka-fu 598-0032 (JP); HIDAKA, Yoshito, Sakai-shi Osaka-fu 590-0113 (JP)
(74) Representative: Manitz, Finsterwald & Partner GbR
(86) International application number: JP9805343
(87) International publication number: WO99028115

(56) References cited:
- JP-A- 8 323 875
- JP-A- 9 300 481
- JP-A- 60 008 103
- JP-A- 63 232 004
- JP-B- 49 030 279
- JP-B- 51 021 034

## Description

### Technical Field

The present invention relates to a tube-less pneumatic tire and a method of manufacturing a pneumatic tire being capable of preventing air leakage from punctures caused in the tread portion by nails and the like.

### Background Art

As one of methods for preventing air leakage from a puncture caused by nail and the like, for example as disclosed in the laid-open Japanese patent application JP-A-8-323875, it has been proposed that a bag-like portion is formed between an inner liner rubber facing the tire inner cavity and a packing rubber sheet provided outside thereof, and a puncture sealant is injected into the bag-like portion by an injector or the like after the vulcanization of the tire is completed.

This bag-like portion is an unbonded part formed as follows. In arranging the packing rubber sheet and inner liner rubber one upon the other during making a raw tire, a powdery or liquid mold-release agent such as talc and the like is applied to the inner surface of the packing rubber sheet with leaving both edge parts not applied so that the edge parts of the packing rubber sheet are bonded to the inner liner rubber during vulcanizing but the part to which the mold-release agent was applied is not bonded.

In the bag-like portion formed by applying the mold-release agent, there is a tendency for the mold-release agent to be applied more than enough, which decreases the area of the bonded part of the packing rubber sheet, and as a result; the bonding strength decreases. Thus, it is difficult to stably make a bag-like portion having a necessary strength. Further, the operation for applying the mold-release agent decreases the efficiency, and often, due to uneven spread of the mold-release agent, bonded spots are formed in the bag-like portion and the injected puncture sealant becomes uneven.

### Disclosure of the Invention

It is an object of the present invention to provide a pneumatic tire and a method of manufacturing a pneumatic tire, in which a bag-like portion (unbonded part) having a sufficient bonding strength can be made easily and stably, and thus a high-quality tire including an injected sealant can be manufactured efficiently with a high available percentage.

In the present invention, in order to achieve the object, there is provided a pneumatic tire as disclosed in claim 1.

Further, in the present invention, there is provided a method of manufacturing a pneumatic tire as disclosed in claim 2.

For the anti-adhesive sheet, a she et of polyfluoroethylene resin is preferably used because the anti-adhesive sheet can expand or contract according to the expansion of the tire during vulcanizing, shaping or the like, and thus the packing rubber sheet can be certainly prevented from tearing.

### Brief Description of the Drawings

Fig.1 is a cross sectional view showing an embodiment of the pneumatic tire.
Fig.2 is a diagram for explaining the sheet-piercing step.
Fig.3(A) is a diagram for explaining the fitting step. Fig.3(B) is a diagram for explaining the anti-adhesive sheet applying step.
Fig.4(A) is a diagram for explaining the inner liner rubber applying step. Fig.4(B) is a diagram for explaining the raw cover forming step.
Fig.5 is a diagram for explaining the injecting step.

### The Best Mode of Carrying out the Invention

Taking the case of a motorcycle tire, an embodiment of the pneumatic tire of the present invention and an embodiment of the manufacturing method of the present invention will now be described in conjunction with the drawings.

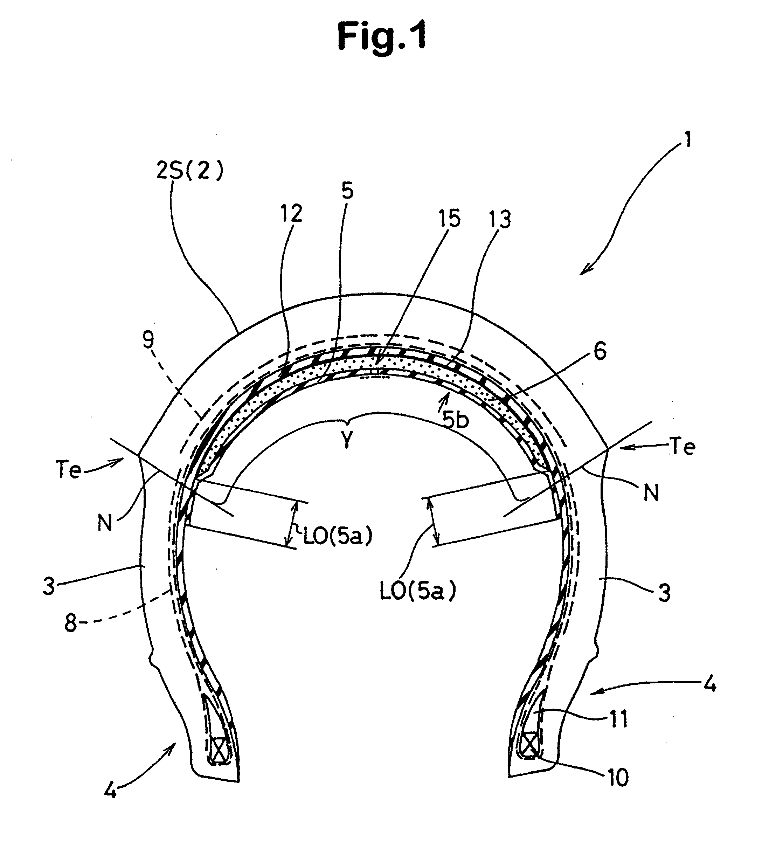

Fig.1 exemplarily shows a motorcycle tire 1 (hereinafter tire 1), wherein a bead portion 4 is provided at an inner end of each of sidewall portions 3 each extending radially inwards from one of a pair of ends of a tread portion 2. Thus, the tire 1 is toroidal. And a puncture sealant 6 is sealed with a packing rubber sheet 5 which extends circumferentially at the inner surface of the tire in the tread portion.

Further, the tire 1 is reinforced by cord layers including a carcass 8 extending between the bead portions 4 and a breaker 9 disposed radially outside the carcass 8 in the tread portion 2 to provide a necessary tire strength and rigidity.

In the bead portion 4, a bead apex rubber 11 having a triangular sectional shape extending radially outwardly from a bead core 10 is disposed to increase the bead rigidity.

For the carcass 8, there is used at least one carcass ply having a radial or semi-radial structure in which carcass cords are arranged at an angle of from 70 to 90 degrees, or a bias structure in which carcass cords are arranged at an angle of from 35 to 70 degrees, with respect to the circumferential direction. Both ends of the carcass ply are turned up around the bead cores 10 to be secured thereto.

The breaker 9 is composed of at least one ply, usually plural plies of breaker cords laid at an angle of from 0 to 70 degrees with respect to the circumferential direction. It is however possible to remove the breaker 9 if so required by the desired tire performance.

On the inner surface of the carcass 8, an inner liner rubber 12 and a packing rubber sheet 5 are disposed in that order. The inner liner rubber 12 is composed of a gas-impermeable butyl rubber compound such as butyl rubber, halogenated butyl rubber or the like, and it has a substantially constant thickness of from 0.5 to 2.0 mm and covers all over the inner surface of the carcass 8.

The packing rubber sheet 5 in this embodiment is a band-like rubber sheet which has a width of not less than 80% of a tread inside region Y and extends continuously in the circumferential direction. It is provided in each of side edge portions with a bonding part 5a to be bonded with the inner liner rubber 12 by vulcanization for example. The width L0 of each bonding part 5a is, for example, 4.0 to 10.0 mm, preferably 5.0 to 7.0 mm. When the width L0 of the bonding part 5a is less than 4.0 mm, the bonding strength is liable to become insufficient. When more than 10.0 mm, the width of the injected sealant 6 is decreased more than is necessary. The above-mentioned "tread inside region Y" is a region in the inner surface of the tire extending between normal lines N and N drawn to the tread face 2S at the tread edges Te.

Preferably, the packing rubber sheet 5 has a thickness of from 0.5 to 2.0 mm for example. If the thickness is less than 0.5 mm, the strength is insufficient for protecting the sealant, and it becomes difficult to evenly apply the tire inflation pressure to the sealant. If more than 2.0 mm, the weight undesirably increases. Accordingly, it is more preferable that the thickness is 1.0 to 1.5 mm. For the packing rubber sheet 5, a butyl rubber compound which is substantially same as the inner liner rubber 12 is preferably used. Also brominated butyl rubber or halogenated butyl rubber can be used. Further, rubber compounds containing diene rubber such as styrene butadiene rubber and the like can be used as far as it can be bonded by the heat during vulcanization.

Between the bonding parts 5a of the packing rubber sheet 5, an unbonded part 5b is formed by disposing an anti-adhesive sheet 13 between the packing rubber sheet 5 and the inner liner rubber 12 to prevent these from bonding together. In a bag-like portion defined as the unbonded part 5b between the inner liner rubber 12 and the packing rubber sheet 5, the sealant 6 is sealed and is secured air-tightly in this example.

The sealant 6 is liquid at a normal temperature (20 degrees C). For example, a viscous material having a coefficient of viscosity in the range of from 2.0 to 10.0 mPa·s (temperature 20 deg. C) is suitably used. But, various fluid puncture sealants can be used as far as a hole caused by nail can be sealed up therewith in a temperature range of from minus 20 to plus 60 degrees C.

The anti-adhesive sheet 13 is a band-like body which is about 8 to 20 mm narrower in width than the packing rubber sheet 5 and which is made of a material having a separating effect with respect to at least rubber. It is preferable that the anti-adhesive sheet 13 has an elongation property such that it can elongate following the surrounding rubber during making a raw tire and during vulcanizing. Therefore, it is especially preferable to set the elongation at a load of 400 grams per 8 mm sheet width in a range of not less than 20 %.

In this embodiment, Teflon (Du Pont's trademark) or polyfluoroethylene resin is used, and a necessary elongation property is provided by setting the thickness in a range of from 0.05 to 0.15 mm (for example 0.1 mm). If the above- mentioned elongation is less than 20 %, there is a possibility that the packing rubber sheet 5 is torn during making the raw tire or during vulcanizing. Although the polyfluoroethylene resin sheet is especially suitable for the anti-adhesive sheet, its cost is high. Therefore, a low cost material such as a nylon film is used. For such nylon film, one including nylon-6 as a main material (for example, "RAYFAN NO" a tradename of TORAY SYNTHETIC FILM COMPANY) is especially suitable. Table 1 shows physical properties of this nylon film.

**Table 1**

| Item | Unit | Value | Measuring method |
|---|---|---|---|
| Density | g/cu.cm | 1.13 | Density gradient tube method |
| Melting point | deg.C | 215 | |
| Tensile strength | kg/sq.mm | 6 to 9 | ASTM-D882 |
| Elongation | % | 300 to 400 | ASTM-D882 |
| Young's modulus | kg/sq.mm | 45 to 55 | ASTM-D882 |
| Tear strength | g | 50 to 60 | ASTM-D1922 |
| Impact strength | kg-cm/mm | 1600 | Drop ball impact method |
| Moisture permeability | g/sq.m day 0.1mm | 60 to 80 | JIS-Z208 40 deg.C RH 90% |
| Oxygen transmittance | c.c./sq.m day atm 0.1mm | 6 | ASTM-D1434 20 deg.C dry |
| Haze | % | 4 to 6 | JIS-K6718 |
| Coefficient of static friction | - | 0.5 to 0.7 | |
| (30 micron, 20 deg.C, 65% RH) | | | |

From the results of various tests conducted by the inventors, it was confirmed that the anti-adhesive sheet made of such nylon film can display a good separating effect and elongation performance even if the thickness is decreased to for example about 25 micrometers.

Next, a method of manufacturing the tire 1 will be explained.

The manufacturing method in this embodiment comprises a sheet-piercing step P1, a fitting step P2, an anti-adhesive sheet applying step P3, an inner liner rubber applying step P4, a raw cover forming step P5, and an injecting step P6.

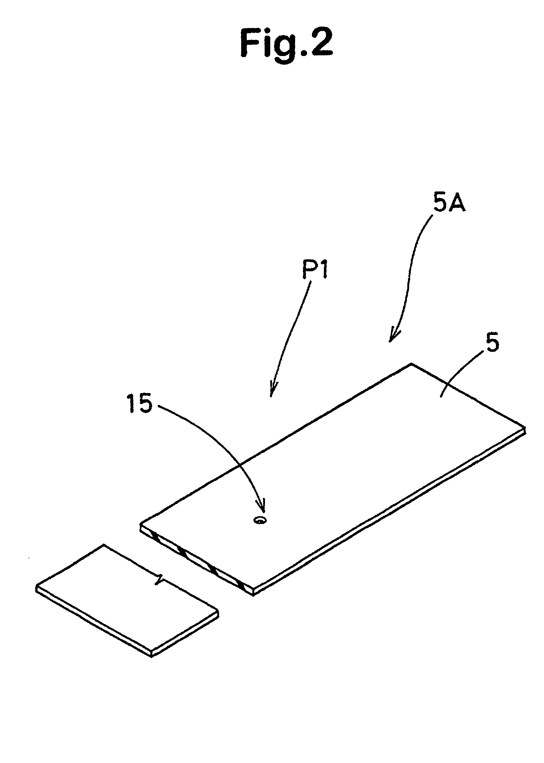

In the sheet-piercing step P1 (schematically shown in Fig.2), a packing rubber sheet 5A provided with a hole for injecting the sealant 6 is formed by piercing the hole 15 in the packing rubber sheet 5 which is being cut or has been cut into a specific width and a specific length. In this embodiment, the injecting hole 15 having a diameter of 2 to 8 mm is provided in the central portion of the packing rubber sheet 5 in the widthwise direction.

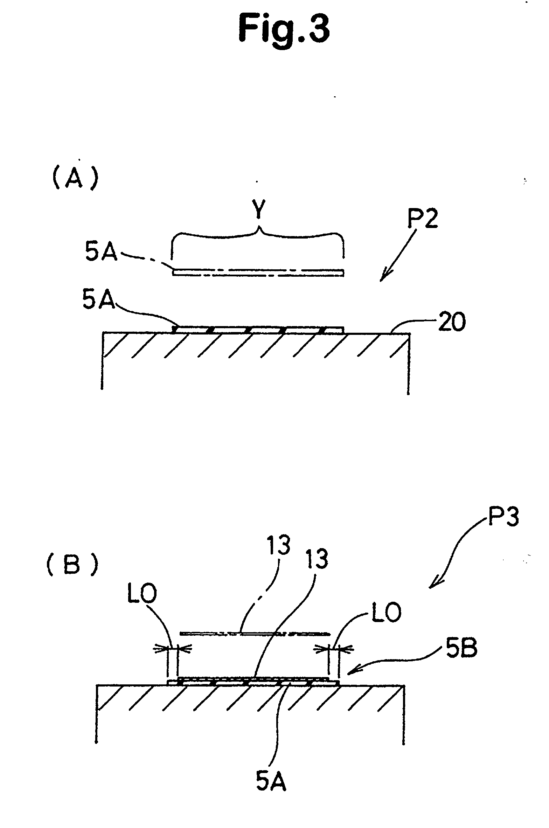

In the fitting step P2 (schematically shown in Fig.3(A)), the packing rubber sheet 5A is applied to a shaping former 20 in a position thereon which corresponds to the above-mentioend tread inside region Y.

In the anti-adhesive sheet applying step P3 (schematically shown in Fig.3(B)), a packing rubber sheet 5B with an anti-adhesive sheet thereon is formed by applying the anti-adhesive sheet 13 to the upper surface of the packing rubber sheet 5A so that both side edges of the anti-adhesive sheet 13 are placed at certain positions each spaced apart from one of side edges of the packing rubber sheet 5A by a distance equal to the width L0.

In the present invention, therefore, the step in the prior art to apply the mold release agent is replaced by a very simple work to apply the anti-adhesive sheet 13 having a constant width and a constant thickness to the packing rubber sheet 5.

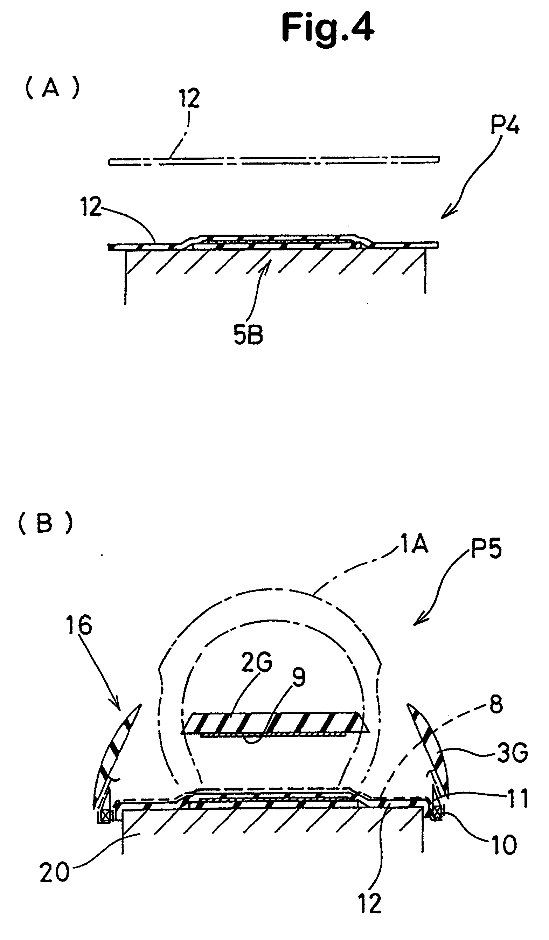

In the inner liner rubber applying step P4 (schematical ly shown in Fig.4(A)), the inner liner rubber 12 is applied to the upper surface of the packing rubber sheet 5B provided with the anti-adhesive sheet thereon.

In the raw cover forming step P5 (schematically shown in Fig.4(B)), a raw cover 1A is formed by adding tire-main-body components 16 including a carcass 8 and bead cores 10 onto the inner liner rubber 12, and by expanding by the shaping former 20. In this embodiment, the tire-main-body components 16 further includes a bead apex rubber 11, a breaker 9, a tread rubber 2G, and a sidewall rubber 3G. And both ends of the carcass 8 are turned up before expanding.

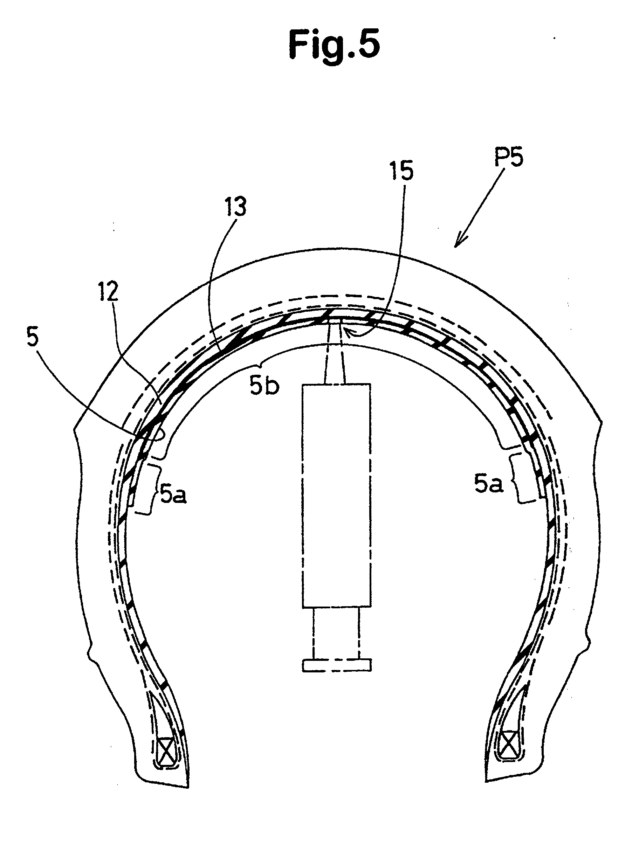

The injecting step P6 (schematically shown in Fig.5) is a step to be done after vulcanizing the raw cover 1A, in which the sealant 6 is injected from the injecting hole 15 into an unbonded part 5b between the inner liner rubber 12 and the packing rubber sheet 5 where these are prevented from bonding by the anti-adhesive sheet 13, and there is formed a sealant layer swelled to a specific thickness by the injection in a given quantity by means of an injector like a syringe. In this embodiment, after the injection, the hole 15 is closed with a sheet of unvulcanized or vulcanized rubber and the like to which an adhesive agent is applied.

As described above, in the method of manufacturing the pneumatic tire in this embodiment, the anti-adhesive sheet having a constant width and a constant thickness is applied to the packing rubber sheet 5 instead of applying the mold release agent. Therefore, the efficiency is improved, and it becomes possible to accurately control the width L0 of the bonding part 5a on each side. As a result, the bonding strength of the bag-like portion can be increased and stabilized. And the width of the unbonded part 5b and the volume of the bag-like portion into which the sealant is injected are evened. Thus, a pneumatic tire in which the thickness of the sealant layer is evened can be obtained.

Further, the separation failure due to uneven spread of the mold release agent can be fully prevented. Furthermore, because the injecting hole 15 is provided in the packing rubber sheet 5 in advance to insert the tip of the injector to inject the sealant 6 and the anti-adhesive sheet 13 can protect the inner liner rubber 12, the inner liner rubber 12 is prevented from being wounded. Thus, as explained above, high-quality tires can be efficiently manufactured at a high available percentage..

### Working Example

Motorcycle tires of size 3.00-10 having the structure shown in Fig.1 were experimentally made according to the above-mentioned manufacturing method. The sheet materials shown in Table 2 were used as the anti-adhesive sheet, and the tire qualities were compared. As to the dimensions of the sheet, Example 1 was 140 mm in width, 760 mm in length and 0.1 mm in thickness. Example 2 was 140 mm in width, 1500 mm in length and 0.025 mm (25 micron) in thickness.

**Table 2**

| | Anti adhesive sheet | Result of Manufacturing |
|---|---|---|
| Ref.1 | Cellophane | Raw cover could be made and Vulcanization was possible, but Unbonded part was not formed because it has no anti-adhesive effect. |
| Ref.2 | Ordinary paper | Row cover could be made, but Packing rubber sheet was torn during vulcanizing |
| Ref.3 | Tracing paper | Row cover could be made, but Packing rubber sheet was torn during vulcanizing |
| Ref.4 | Teflon tape with fibers | Packing rubber sheet was torn during making Raw cover |
| Ex.1 | Teflon tape | Packing rubber sheet was not torn and Unbonded part could be formed with accuracy |
| Ex.2 | Nylon film | Packing rubber sheet was not torn and Unbonded part could be formed with accuracy |

As shown by Table 2, the bag-like portion could be formed efficiently and air-tightly in Example tires 1 and 2 in which Teflon sheet or nylon sheet having a separating effect and an extensibility was used as the anti-adhesive sheet.

As explained above, in the pneumatic tire of the present invention, the packing rubber sheet for sealing the sealant has the bonded parts fused together with the inner liner rubber, and the unbonded part prevented from bonding to the inner liner rubber by the anti-adhesive sheet having a separating effect and disposed between the bonded parts. And the sealant is sealed in the bag-like portion defined as the unbonded part between the inner liner rubber and packing rubber sheet. Therefore, an accurate pneumatic tire can be obtained in which the volume of the bag-like portion into which the sealant is injected is evened and the thickness of the sealant layer is evened.

In the manufacturing method according to the present invention, the anti-adhesive sheet having a constant width and a constant thickness is applied to the packing rubber sheet instead of applying the mold release agent. Therefore, the efficiency is improved, and it becomes possible to control the width of the bonding parts in the both edges of the packing rubber sheet with a high-precision. As a result, it becomes possible to easily manufacture such a pneumatic tire that the bonding strength of the bag-like portion is increased and stabilized, and the width of the unbonded part and the volume of the bag-like portion into which the sealant is injected are evened, and the thickness of the sealant layer is evened.

## Claims

1. A pneumatic tire (1) comprising
a tread portion (2), a pair of sidewall portions (3) and a pair of bead portions (4) which continue in a toroidal shape,
an inner liner rubber (12) disposed along the inner surface of the tire (1),
a packing rubber sheet (5) extending circumferentially at the inner surface of the tire (1) in the tread portion (2),
the packing rubber sheet (5) having bonded parts (5a) defined as both side edge parts bonding with the inner liner rubber (12), and
an unbonded part (5b) defined as a part therebetween not bonding with the inner liner rubber (12),
a sealant (6) sealed in a bag-like portion between the inner liner rubber (12) and the packing rubber sheet (5) which is defined by the unbonded part (5b),
**characterized in that**
the unbonded part (5b) is prevented from bonding with the inner liner rubber (12) by an anti-adhesive sheet (13) disposed therebetween.

2. A method of manufacturing a pneumatic tire (1) comprising piercing a hole (15) in a packing rubber sheet (5) to form a packing rubber sheet (5A) with an injecting hole (15) for a sealant (6), applying the packing rubber sheet (5A) with the injecting hole (15) onto a shaping former (20),
applying an inner liner rubber (12) to the upper surface of the packing rubber sheet (5B)
making a bag-like portion extending along the inner surface of the tire in the tread portion (2),
adding tire-main-body components (16) including at least a carcass (8) and bead cores (10) onto the inner liner rubber (12) so as to form a raw cover (1A),
vulcanizing the raw cover (16),
injecting, after the vulcanization, the sealant (6) from the injecting hole (15) into the bag-like portion,
**characterized by** the step of applying an anti-adhesive sheet (13) to the upper surface of the packing rubber sheet (5A) on the shaping former (20) so as to form a packing rubber sheet (5B) with an anti-adhesive sheet (13), wherein the anti-adhesive sheet (13) is narrower in width than the packing rubber sheet (5A), and both side edges of the anti-adhesive sheet (13) are located at positions which are spaced apart from both side edges of the packing rubber sheet (5A) by the same distance (LO),
so as to form an unbonded part between the inner liner rubber and packing rubber sheet where these are prevented from bonding by the anti-adhesive sheet (13) during vulcanizing.

3. Method according to claim 2, wherein the anti-adhesive sheet is made of a polyfluoroethylene resin.

## Patentansprüche

1. Luftreifen (1), umfassend:
einen Laufstreifenabschnitt (2), zwei Seitenwandabschnitte (3) und zwei Wulstabschnitte (4), die sich zu einer Torusform fortsetzen,
einen Innenseelengummi (12), der entlang der Innenfläche des Reifens (1) angeordnet ist,
eine Packungsgummibahn (5), die sich in Umfangsrichtung an der Innenfläche des Reifens (1) in dem Laufstreifenabschnitt (2) erstreckt,
wobei die Packungsgummibahn (5) verbundene Teile (5a), die als beide Seitenkantenteile definiert sind, die mit dem Innenseelengummi (12) verbunden sind, und einen nicht verbundenen Teil (5b) aufweist, der als ein Teil dazwischen definiert ist, der nicht mit dem Innenseelengummi (12) verbunden ist,
ein Dichtungsmittel (6), das in einem taschenähnlichen Abschnitt zwischen dem Innenseelengummi (12) und der Packungsgummibahn (5), der durch den nicht verbundenen Teil (5b) definiert ist, eingeschlossen ist,
**dadurch gekennzeichnet, dass**
durch eine zwischen dem nicht verbundenen Teil (5b) und dem Innenseelengummi (12) angeordnete Anti-Haftbahn (13) verhindert ist, dass sich diese miteinander verbinden.

2. Verfahren zum Herstellen eines Luftstreifens (1), das umfasst, dass ein Loch (15) in eine Packungsgummibahn (5) gestoßen wird, um eine Packungsgummibahn (5A) mit einem Einspritzloch (15) für ein Dichtungsmittel (6) zu bilden, die Packungsgummibahn (5A) mit dem Einspritzloch (15) auf eine Formgebungseinrichtung (20) aufgebracht wird,
ein Innenseelengummi (12) auf die obere Fläche der Packungsgummibahn (5B) aufgebracht wird,
ein taschenähnlicher Abschnitt hergestellt wird, der sich entlang der Innenfläche des Reifens in dem Laufstreifenabschnitt (2) erstreckt, Bauteile (16) des Reifenhauptkörpers, die mindestens eine Karkasse (8) und Wulstkerne (10) umfassen, auf dem Innenseelengummi (12) hinzugefügt werden, um eine Rohdecke (1A) zu bilden,
die Rohdecke (16) vulkanisiert wird,
nach der Vulkanisation das Dichtungsmittel (6) aus dem Einspritzloch (15) in den taschenähnlichen Abschnitt eingespritzt wird, **gekennzeichnet durch** den Schritt, dass eine Anti-Haftbahn (13) auf die obere Fläche der Packungsgummibahn (5A) auf der Formgebungseinrichtung (20) aufgebracht wird, um eine Packungsgummibahn (58) mit einer Anti-Haftbahn (13) zu bilden, wobei die Anti-Haftbahn (13) eine schmalere Breite als die Packungsgummibahn (5A) aufweist und beide Seitenkanten der Anti-Haftbahn (13) an Stellen angeordnet sind, die von beiden Seitenkanten der Packungsgummibahn (5A) mit dem gleichen Abstand (LO) beabstandet sind, um einen nicht verbundenen Teil zwischen dem Innenseelengummi und der Packungsgummibahn zu bilden, an dem **durch** die Anti-Haftbahn (13) verhindert wird, dass sich diese während der Vulkanisation verbinden.

3. Verfahren nach Anspruch 2, wobei die Anti-Haftbahn aus einem Polyfluorethylenharz hergestellt wird.

## Revendications

1. Pneumatique (1), comprenant :
une partie formant bande de roulement (2), une paire de parties de paroi latérale (3) et une paire de talons (4) qui se poursuivent dans une forme toroïdale,
un doublage en caoutchouc intérieur (12) disposé le long de la surface intérieure du pneumatique (1),
une feuille de garniture en caoutchouc (5) s'étendant circonférentiellement à la surface intérieure du pneumatique (1) dans la partie de la bande de roulement (2),
la feuille de garniture en caoutchouc (5) comportant des parties collées (5a) définies comme étant les deux parties de bordure latérale collées avec le doublage en caoutchouc intérieur (12), et une partie non collée (5b) définie comme étant une partie entre celles-ci et non collée avec le doublage en caoutchouc intérieur (12),
un produit d'étanchement (6) scellé dans une partie en forme de sac entre le doublage en caoutchouc intérieur (12) et la feuille de garniture en caoutchouc (5) qui est définie par la partie non collée (5b),
**caractérisé en ce que**
la partie non collée (5b) est empêchée de se coller sur le doublage en caoutchouc intérieur (12) par une feuille anti-adhésive (13) disposée entre ceux-ci.

2. Procédé pour fabriquer un pneumatique (1) comprenant
le perçage d'un trou (15) dans une feuille de garniture en caoutchouc (5) pour former une feuille de garniture en caoutchouc (5A) avec un trou d'injection (15) pour un produit d'étanchement (6),
l'application de la feuille de garniture en caoutchouc (5A) avec le trou d'injection (15) sur un élément de mise en forme (20),
l'application d'un doublage en caoutchouc intérieur (12) sur la surface supérieure de la feuille de garniture en caoutchouc (5B),
la réalisation d'une partie en forme de sac s'étendant le long de la surface intérieure du pneumatique dans la partie de la bande de roulement (2),
l'addition des composants (16) du corps principal de pneumatique incluant au moins une carcasse (8) et des âmes de talons (10) sur le doublage en caoutchouc intérieur (12) de manière à former une enveloppe brute (1A),
la vulcanisation de l'enveloppe brute (16),
l'injection, après la vulcanisation, du produit d'étanchement (16) depuis le trou d'injection (15) dans la partie en forme de sac,
**caractérisé par** l'opération consistant à appliquer une feuille anti-adhésive (13) sur la surface supérieure de la feuille de garniture en caoutchouc (5A) sur l'élément de mise en forme (20) de manière à former une feuille de garniture en caoutchouc (5B) avec une feuille anti-adhésive (13), ladite feuille anti-adhésive (13) étant plus étroite en largeur que la feuille de garniture en caoutchouc (5A), et les deux bordures latérales de la feuille anti-adhésive (13) sont situées à des positions qui sont écartées depuis les deux bordures latérales de la feuille de garniture en caoutchouc (5A) de la même distance (LO),
de manière à former une partie non collée entre le doublage en caoutchouc intérieur et la feuille de garniture en caoutchouc, au niveau de laquelle ceux-ci sont empêchés de se coller pendant la vulcanisation grâce à la feuille anti-adhésive (13).

3. Procédé selon la revendication 2, dans lequel la feuille anti-adhésive est réalisée avec une résine au polyfluoroéthylène.
